# EUROPEAN PATENT SPECIFICATION

(11) **EP 4 607 313 B1**
(45) Date of publication and mention of the grant of the patent: **02.12.2026**
(21) Application number: 23883064.0
(22) Date of filing: 24.10.2023
(51) Int. Cl.: G06F 1/16

(54) **ELECTRONIC DEVICE COMPRISING HINGE ASSEMBLY**
ELEKTRONISCHE VORRICHTUNG MIT SCHARNIERANORDNUNG
DISPOSITIF ÉLECTRONIQUE COMPRENANT UN ENSEMBLE CHARNIÈRE

(30) Priority: 25.10.2022 KR 20220138094; 11.11.2022 KR 20220150514
(43) Date of publication of application: 27.08.2025
(73) Proprietor: Samsung Electronics Co., Ltd., Suwon-si, Gyeonggi-do 16677 (KR)
(72) Inventor: PARK, Sangil, Suwon-si, Gyeonggi-do 16677 (KR); HA, Dohyung, Suwon-si, Gyeonggi-do 16677 (KR); PARK, Minhoo, Suwon-si, Gyeonggi-do 16677 (KR); KWON, Kijin, Suwon-si, Gyeonggi-do 16677 (KR); KIM, Kisung, Suwon-si, Gyeonggi-do 16677 (KR); LEE, Wooseok, Suwon-si, Gyeonggi-do 16677 (KR); JUNG, Gwangchae, Suwon-si, Gyeonggi-do 16677 (KR); CHUNG, Chongyoon, Suwon-si, Gyeonggi-do 16677 (KR)
(74) Representative: Gulde & Partner
(86) International application number: PCT/KR2023/016571
(87) International publication number: WO 2024/090958

(56) References cited:
- KR-A- 20150 099 677
- KR-A- 20160 118 041
- KR-A- 20170 069 115
- KR-A- 20180 062 275
- KR-B1- 102 201 928

## Description

### [Technical Field]

The examples described in the disclosure relate to an electronic device that includes a hinge assembly and a cover member enclosing the hinge assembly.

### [Background Art]

The term "electronic device" may refer to a device that performs a specific function based on an installed program, such as a home appliance, an electronic scheduler, a portable multimedia player, a mobile communication terminal, a tablet PC, a video/audio device, a desktop/laptop PC, or a vehicle navigation system. For example, these electronic devices may output stored information as sound or images. As the demand for mobile communication and the degree of integration of electronic devices have increased, various techniques are being developed to enhance the portability of electronic devices and improve user convenience in using multimedia functions or the like. Such electronic devices are known from KR20150099677A.

The above-described information may be provided as related art for the purpose of helping to understand the disclosure described herein. No claim or determination is made as to whether any of the foregoing may be applied as a prior art in connection with the disclosure.

### [Detailed Description of the Invention]

### [Technical Solution]

According to an embodiment disclosed herein, an electronic device may include a first housing, a second housing, a hinge assembly rotatably connecting the first housing and the second housing to each other, a first surface of the first housing, a flexible display, a cover member, a slide structure, and/or a guide portion. The display may be disposed to cross a portion of the hinge assembly and the second surface of the second housing. The cover member may be disposed to cross a third surface of the first housing opposite the first surface, a portion of the hinge assembly, and a fourth surface of the second housing opposite the second surface. The slide structure may be disposed at least partially between the cover member and the second housing. The slide structure may connect a portion of the cover member to the second housing to be slidable in a first direction. The guide portion may be provided in an area of the second housing to at least partially accommodate the cover member and the slide structure. The guide portion may extend at a predetermined angle relative to the fourth surface to face an inner side of the second surface from a point on the fourth surface of the second housing.

### [Brief Description of Drawings]

The above-described aspects or other aspects, configurations, and/or advantages regarding an embodiment of the disclosure may become more apparent through the following detailed description made with reference to the accompanying drawings.
FIG. 1 is a block diagram of an electronic device according to an embodiment of the disclosure in a network environment.
FIG. 2 is a view illustrating an electronic device according to an embodiment of the disclosure in an unfolded state.
FIG. 3 is a view illustrating the electronic device according to an embodiment of the disclosure in a folded state.
FIG. 4 is an exploded perspective view of the electronic device according to an embodiment disclosed herein.
FIG. 5 is a rear perspective view illustrating an electronic device according to an embodiment of the disclosure in the unfolded state.
FIG. 6 is a rear perspective view illustrating the electronic device according to an embodiment of the disclosure in an intermediate state.
FIG. 7 is an exploded perspective view illustrating the electronic device according to an embodiment of the disclosure.
FIG. 8 is a cross-sectional view of the electronic device taken along line A-A' in FIG. 5.
FIG. 9 is a cross-sectional view of the electronic device taken along line B-B' in FIG. 5.
FIG. 10 is a cross-sectional view of the electronic device taken along line C-C' in FIG. 5.
FIG. 11 is a cross-sectional view of the electronic device taken along line D-D' in FIG. 5.
FIG. 12 is a rear perspective view illustrating a second housing according to an embodiment of the disclosure.
FIG. 13 is a view illustrating a connection relationship between a slide structure and the second housing according to an embodiment of the disclosure.
FIG. 14 is a view illustrating a connection relationship between a slide structure and the second housing according to an embodiment of the disclosure.
FIG. 15 is a rear perspective view illustrating the electronic device according to an embodiment of the disclosure in the unfolded state.
FIG. 16 is a rear perspective view illustrating the electronic device according to an embodiment of the disclosure in an intermediate state.

Throughout the appended drawings, like reference numerals may be assigned to like components, configurations, and/or structures.

### [Mode for Carrying out the Invention]

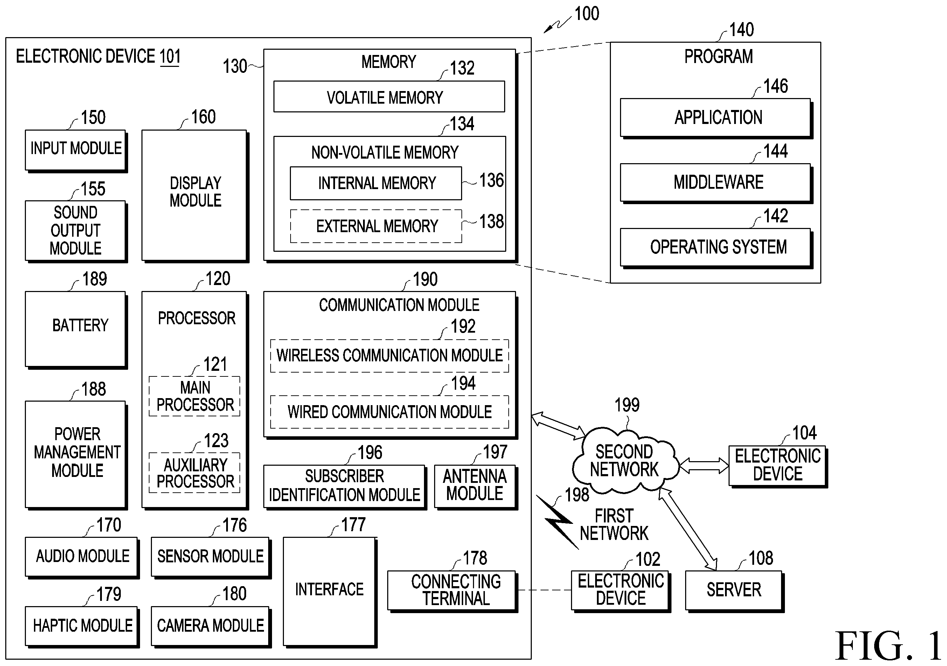

FIG. 1 is a block diagram of an electronic device in a network environment according to an embodiment of the disclosure.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

In the following detailed description, a length direction, a width direction, and/or a thickness direction of an electronic device may be mentioned. The length direction may be defined as the "Y-axis direction", the width direction may be defined as the "X-axis direction", and/or the thickness direction may be defined as the "Z-axis direction". In an embodiment, the direction in which a component is oriented may be mentioned along with the orthogonal coordinate system illustrated in the drawings, as well as the "negative/positive symbol (-/+)". For example, the front surface of an electronic device or a housing may be defined as a "surface oriented in the +Z direction", and the rear surface may be defined as a "surface oriented in the -Z direction". In an embodiment, a side surface of the electronic device or the housing may include an area oriented in the +X direction, an area oriented in the +Y direction, an area oriented in the -X direction, and/or an area oriented in the -Y direction. For example, the "X-axis direction" may include both the "-X direction" and the "+X direction". It is noted that these are based on the orthogonal coordinate system illustrated in the drawings for the sake of brevity of description, and the description of these directions or components does not limit an embodiment of the disclosure. For example, depending on whether the electronic device is in an unfolded or folded state, the direction in which the aforementioned front or rear surface may vary, and the aforementioned directions may be interpreted differently depending on a user's holding habits.

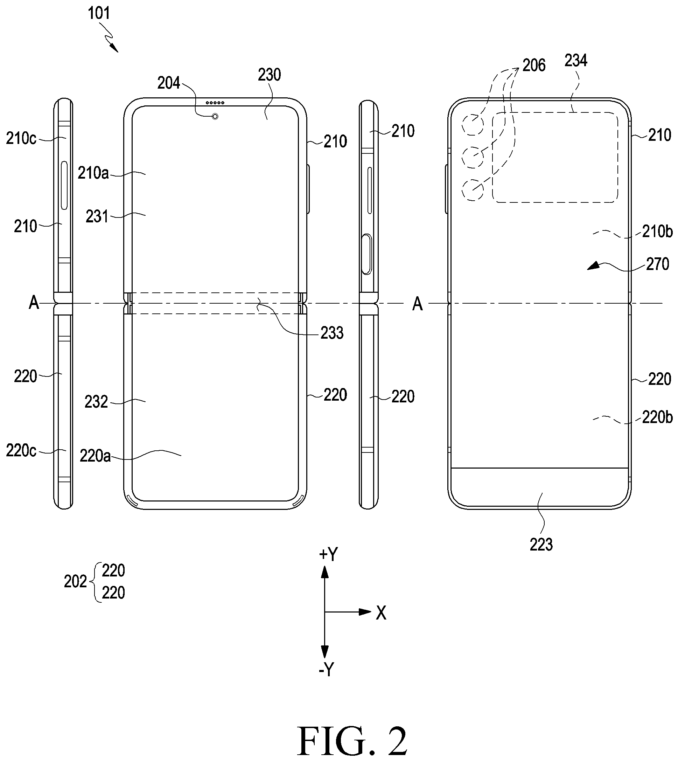

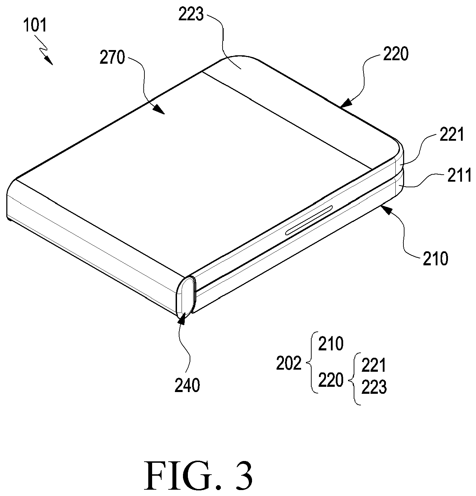

FIG. 2 is a view illustrating an electronic device according to an embodiment of the disclosure in an unfolded state. FIG. 3 is a view illustrating the electronic device according to an embodiment of the disclosure in a folded state. The configuration of the electronic device 101 of FIGS. 2 and 3 may be wholly or partially the same as that of the electronic device 101 of FIG. 1.

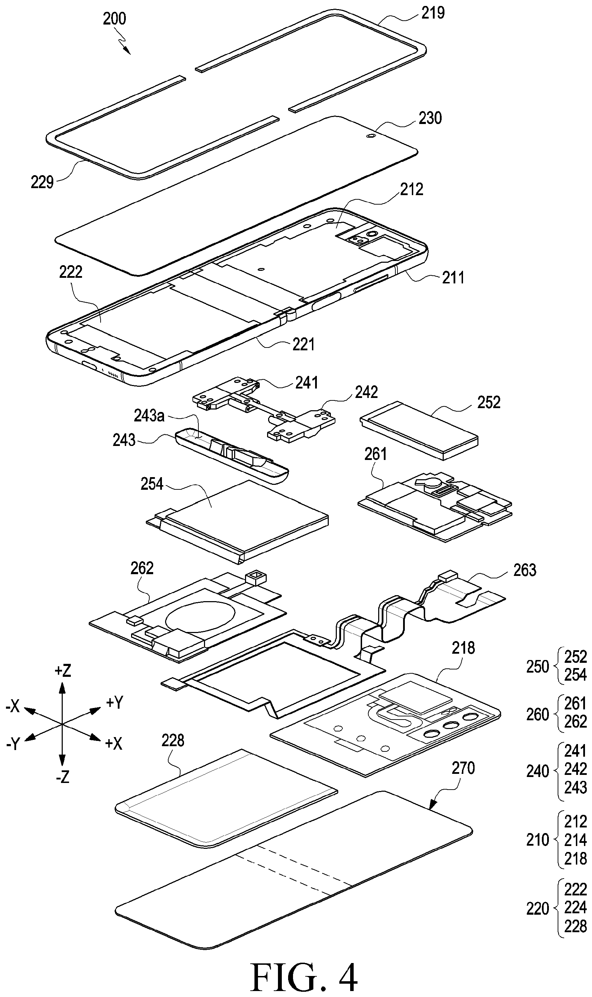

Referring to FIGS. 2 and 3, the electronic device 101 may include a housing 202 configured to accommodate components of the electronic device 101 (e.g., a battery 250 and/or a circuit board 260 of FIG. 4), a flexible or foldable display 230 (hereinafter, referred to as a "display 230") connected to the housing 202, and/or a cover member 270 disposed on an outer surface of the housing 202. According to an embodiment, the housing 202 may be referred to as a "foldable housing".

According to an embodiment, the housing 202 may include a first housing 210 and a second housing 220 configured to relatively rotate with respect to the first housing 210.

According to an embodiment, the first housing 210 and/or the second housing 220 may define at least a part of the exterior of the electronic device 101. According to an embodiment, the surface on which the display 230 is visually exposed is defined as the front surface (e.g., a first surface 210a and a second surface 220a) of the electronic device 101 and/or the housing 202. The surface opposite to the front surface is defined as the rear surface (e.g., a third surface 210b and a fourth surface 220b) of the electronic device 101. The surface surrounding at least a portion of the space between the front and rear surfaces is defined as the side surface (e.g., a first side surface 210c and a second side surface 220c) of the electronic device 101.

In an embodiment, the cover member 270 may be disposed to enclose at least a portion of the rear surface (e.g., the third surface 210b and the fourth surface 220b) of the electronic device 101. For example, at least a portion of an area of the cover member 270 (e.g., the first cover area 271) overlapping a rear camera (e.g., the rear camera module 206) and/or a rear display 234 may be open.

Referring to FIG. 3, the first housing 210 and/or the second housing 220 may include a first side surface frame 211 and a second side surface frame 221, respectively, disposed on side surfaces (e.g., the first side surface 210c and the second side surface 220c) of the electronic device 101.

According to an embodiment, the second housing 220 may include a support area 223 in an area extending from an end portion (e.g., the end portion in the -Y direction). For example, the support area 223 may be configured to accommodate an end portion (e.g., the end portion in the -Y direction) of the cover member 270 therein.

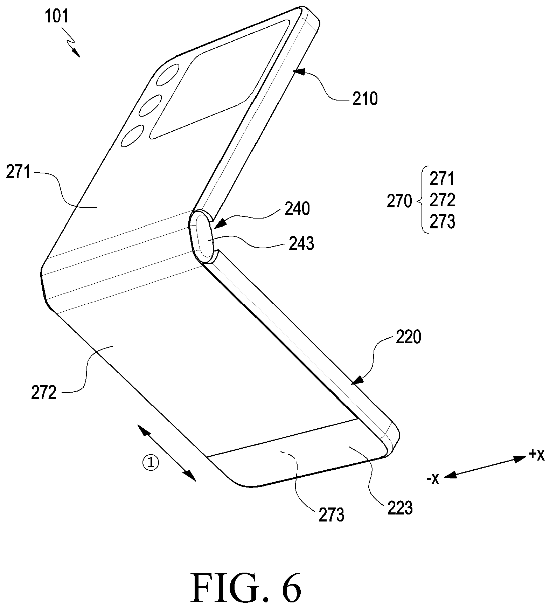

According to an embodiment, the second housing 220 may be rotatably connected to the first housing 210. For example, the first housing 210 and the second housing 220 may be rotatably connected to each other by a hinge structure (e.g., the hinge assembly 240 in FIG. 4) disposed therebetween. The electronic device 101 may be switched between a folded state (e.g., FIG. 2) and an unfolded state (e.g., FIG. 3). When the electronic device 101 is in the folded state, the first surface 210a may face the second surface 220a, and when the electronic device 200 is in the unfolded state, the direction where the first surface 210a is oriented may be the same as the direction where the second surface 220a is oriented. For example, in the unfolded state, the first surface 210a may be located on substantially the same plane as the second surface 220a. According to an embodiment, the first housing 210 may rotate in conjunction with the second housing 220 by receiving rotational force from the second housing 220via an interlocking structure (e.g., an interlocking structure 330 of FIG. 6). In contract, the second housing 220 may rotate in conjunction with the first housing 210 by receiving rotational force from the first housing 210 via an interlocking structure (e.g., an interlocking structure 330 of FIG. 6).

According to an embodiment, the first housing 210 and the second housing 220 may be disposed on opposite sides about the folding axis A and may have generally symmetrical shapes with respect to the folding axis A. The angle between the first housing 210 and the second housing 220 may change depending on whether the electronic device 101 is in the unfolded state, the folded state, or an intermediate state between the unfolded state and the folded state.

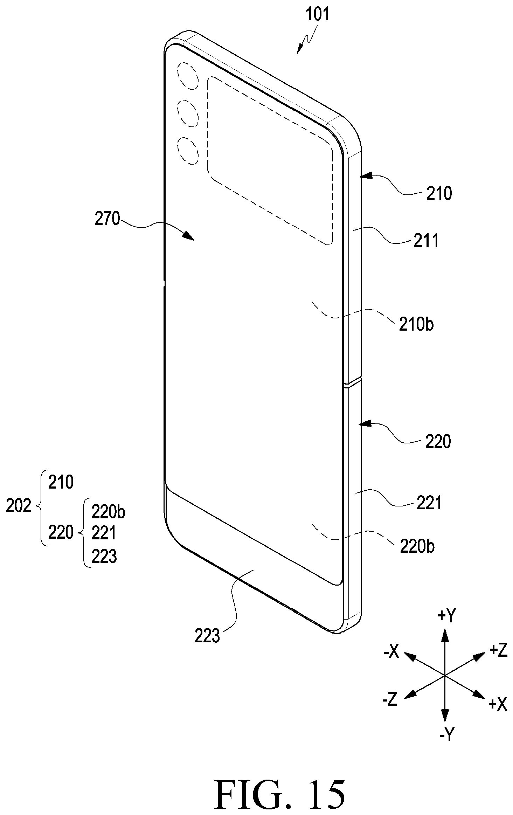

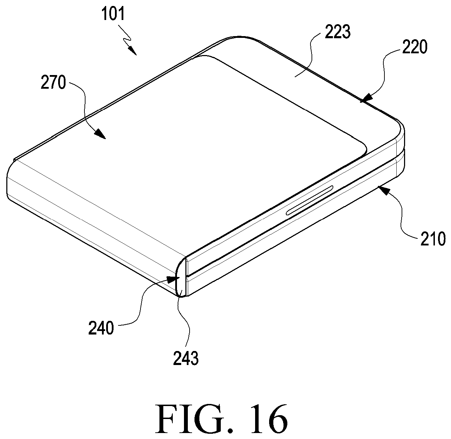

According to an embodiment, the electronic device 101 or the hinge assembly (e.g., the hinge assembly 240 in FIG. 4) may include a hinge cover (e.g., the hinge cover 243 in FIGS. 3 and 4). At least a portion of the hinge cover 243 may be disposed between the first housing 210 and the second housing 220. According to an embodiment, the hinge cover 243 may protect the hinge structure (e.g., the hinge assembly 240 in FIG. 4) from external impact of the electronic device 101. Referring to FIG. 3, for example, the hinge cover 243 may include side surface frame portions disposed in parallel between a first side surface frame 211 and a second side surface frame 221 on the side surfaces in the width direction (e.g., the X-axis direction). According to an embodiment (e.g., see FIGS. 15 and 16), the side surfaces of the hinge cover 243 in the width direction (e.g., the X-axis direction) may be at least partially covered by the first side surface frame 211 and/or the second side surface frame 221.

According to an embodiment, as illustrated in FIG. 2, when the electronic device 101 is in the unfolded state, the hinge cover 243 may not be exposed by being covered by the first housing 210 and the second housing 220. As an example, as illustrated in FIG. 3, when the electronic device 101 is in the folded state (e.g., the fully folded state), the hinge cover 243 may be exposed to the outside between the first housing 210 and the second housing 220. For example, when the first housing 210 and the second housing 220 are in the intermediate state in which the first and second housings are folded with a certain angle therebetween, the hinge cover 243 may be partially exposed to the outside between the first housing 210 and the second housing 220. However, the area exposed in this case may be smaller than that in the fully folded state. In an embodiment, the hinge cover 243 may include a curved surface.

According to an embodiment, the display 230 may visually provide information to the outside of the electronic device 101 (e.g., a user). The display 230 may include, for example, a hologram device or a projector, and a control circuit to control the corresponding device. According to an embodiment, the display 230 may include a touch sensor configured to detect a touch or a pressure sensor configured to measure the intensity of force generated by the touch.

According to an embodiment, the display 230 may refer to a display, at least a portion of which is transformable into a planar surface or a curved surface. For example, the display 230 may be configured to vary in response to the relative movement of the second housing 220 with respect to the first housing 210. According to an embodiment, the display 230 may include a folding area 233, and a first display area 231 disposed on one side (e.g., above (in the +Y direction)) of the folding area 233 and a second display area 232 disposed on the other side (e.g., below (in the -Y direction)) with respect to the folding area 233. According to an embodiment, the folding area 233 may be positioned above a hinge structure (e.g., the hinge assembly 240 in FIG. 4) (in the +Z-axis direction) when the electronic device 101 is in the unfolded state (e.g., FIG. 2). For example, at least a portion of the folding area 233 may face the hinge structure (e.g., the hinge assembly 240 in FIG. 4). According to an embodiment, the folding area 233 may be referred to as a portion of the display 230 that bends at least partially based on a change in the state of the electronic device 101 (e.g., folded or unfolded). According to an embodiment, the first display area 231 may be disposed on the first housing 210, and the second display area 232 may be disposed on the second housing 220. According to an embodiment, the display 230 may be accommodated in the first housing 210 and the second housing 220.

However, the area division of the display 230 illustrated in FIG. 2 is exemplary, and the display 230 may be divided into multiple (e.g., four or more or two) areas depending on its structure or function.

In addition, in the embodiment illustrated in FIG. 2, the areas of the display 230 may be divided by the folding area 233 or the folding axis (the axis A) extending parallel to the X axis. However, in another embodiment, the areas of the display 230 may be divided based on another folding area (e.g., a folding area parallel to the Y axis) or another folding axis (e.g., a folding axis parallel to the Y axis). According to an embodiment, the display 230 may be coupled to or disposed adjacent to a touch detection circuit, a pressure sensor that is capable of measuring touch intensity (pressure), and/or a digitizer configured to detect a magnetic field-type stylus pen.

According to an embodiment, the electronic device 101 may include a rear surface display 234. The rear display 234 may be disposed to be oriented in a different direction from the display 230. For example, the display 230 may be visually exposed through the front surface (e.g., the first surface 210a and/or the second surface 220a) of the electronic device 101, and the rear surface display 234 may be visually exposed through the rear surface (e.g., the third surface 210b) of the electronic device 101.

According to an embodiment, the electronic device 101 may include one or more camera modules 204 and 206 and a flash (not illustrated). According to an embodiment, the electronic device 101 may include a front camera module 204 exposed through the front surface (e.g., the first surface 210a) and/or a rear camera module 206 exposed through the rear surface (e.g., the third surface 210b). The camera modules 204 and 206 may include one or more lenses, image sensors, flashes, and/or image signal processors. The flash (not illustrated) may include a light-emitting diode or xenon lamp. In an embodiment, two or more lenses (e.g., an infrared camera lens, a wide-angle lens, and a telephoto lens) and image sensors may be disposed on one surface of the electronic device 101. The configuration of the front camera module 204 and/or the rear camera module 206 may be entirely or partially identical to the configuration of the camera module 180 of FIG. 1.

FIG. 4 is an exploded perspective view of the electronic device according to an embodiment disclosed herein.

Referring to FIG. 4, the electronic device 101 may include a first housing 210, a second housing 220, a display 230, a hinge cover 243, a battery 250, a printed circuit board 260, a flexible printed circuit board 263, a hinge assembly 240 and/or a cover member 270. The configurations of the first housing 210, the second housing 220, the display 230, and the cover member 270 of FIG. 4 may be wholly or partially identical to those of the first housing 210, the second housing 210, the display 230, and the cover member 270 of FIG. 2 and/or FIG. 3.

According to an embodiment, the first housing 210 may include a first side surface frame 211 (e.g., the first side surface frame 211 in FIG. 3), and the second housing 220 may include a second side surface frame 221 (e.g., the second side surface frame 221 in FIG. 3).

According to an embodiment, the electronic device 101 may include a first support member 212 and a second support member 222. For example, the first housing 210 may include a first support member 212, and the second housing 220 may include a second support member 222. According to an embodiment, the first support member 212 and/or the second support member 222 may support components of the electronic device 101 (e.g., the display 230, the battery 250, and the printed circuit board 260). According to an embodiment, the first support member 212 and/or the second support member 222 may be made of a metal material and/or a non-metal (e.g., polymer) material. According to an embodiment, the first support member 212 may be disposed between the display 230 and the battery 250. For example, the display 230 may be coupled to one surface of the first support member 212, and the battery 250 and the printed circuit board 260 may be disposed on the other surface.

According to an embodiment, the electronic device 101 may include a first protective member 219 and a second protective member 229. For example, the first housing 210 may include the first protective member 219, and the second housing 220 may include the second protective member 229. According to an embodiment, the protective members 214 and 224 may protect the display 230 from external impacts. For example, the first protective member 219 may surround at least a portion of one portion of the display 230 (e.g., the first display area 231 in FIG. 1), and the second protective member 229 may surround at least a portion of another portion of the display 230 (e.g., the second display area 232 in FIG. 1). According to an embodiment, the first protective member 219 may be referred to as a first decoration member, and the second protective member 214 may be referred to as a second decoration member.

According to an embodiment, the housings 210 and 220 may include a first rear surface plate 218 and a second rear surface plate 228. For example, the first housing 210 may include the first rear surface plate 218 connected to the first support member 212, and the second housing 220 may include the second rear surface plate 228 connected to the second support member 222. According to an embodiment, the rear surface plates 216 and 228 may define a portion of the exterior of the electronic device 101. For example, the outer surfaces (e.g., the surfaces in the -Z direction) of the first rear plate 218 and the second rear plate 228 may correspond to the rear surfaces (e.g., the third surface 210b and the fourth surface 220b in FIG. 2) of the electronic device 101. According to an embodiment, the rear cover 270 may be disposed on the outer surfaces (e.g., the surfaces in the -Z direction) of the rear surface plates 218 and 228 or the rear surfaces (e.g., the third surface 210b and the fourth surface 220b in FIG. 2) of the electronic device 101.

According to an embodiment, a first battery 252 and a first printed circuit board 261 may be disposed between the first support member 212 and the first rear surface plate 218, and a second battery 254 and a second printed circuit board 262 may be disposed between the second support member 222 and the second rear surface plate 228.

According to an embodiment, the hinge assembly 240 may include one or more hinge structures 241 and 242 and/or a hinge cover 243. For example, the hinge cover 243 may form at least a portion of the appearance of the electronic device 101. For example, the hinge cover 243 may include an accommodation groove 243a configured to accommodate the one or more hinge structures 241 and 242. According to an embodiment, the hinge cover 243 may be coupled to the one or more hinge structures 241 and 242. According to an embodiment, when the electronic device 101 is in the unfolded state, at least a portion of the hinge cover 243 may be positioned between the hinge assembly 240 and the housings 210 and 220. According to an embodiment, the hinge cover 243 can guide the movement of the housings 210 and 220. For example, the first housing 210 and the second housing 220 may rotate relative to the hinge cover 243 in the state of being connected to the hinge cover 243.

According to an embodiment, the hinge assembly 240 may include multiple hinge structures 241, 242 arranged in parallel. For example, the hinge assembly 240 may include a first hinge structure 241 and a second hinge structure 242 spaced apart from the first hinge structure 241. According to an embodiment, the first hinge structure 241 and the second hinge structure 242 may be symmetrical to each other with respect to the length direction of the electronic device 101 (e.g., the Y-axis direction). According to an embodiment, depending on the embodiment of the electronic device 101, the hinge assembly 240 or some components of the hinge assembly 240 (e.g., the hinge cover 243) may be omitted.

According to an embodiment, the battery 250 is a device that supplies power to at least one component of the electronic device 101, and may include a non-rechargeable primary battery, a rechargeable secondary battery, or a fuel cell. The battery 250 may be integrally disposed inside the electronic device 101 or may be detachably disposed on the electronic device 101. According to an embodiment, the battery 250 may include a first battery 252 disposed in the first housing 210 and a second battery 254 disposed in the second housing 220. For example, the first battery 252 may be disposed on the first support member 212, and the second battery 254 may be disposed on the second support member 222.

According to an embodiment, a processor (e.g., the processor 120 in FIG. 1), memory (e.g., the memory 130 in FIG. 1), and/or an interface (e.g., the interface 177 in FIG. 1) may be mounted on the printed circuit board 260. According to an embodiment, the printed circuit board 260 may include a first printed circuit board 261 disposed in the first housing 210 and a second printed circuit board 262 disposed in the second housing 220.

According to an embodiment, the flexible printed circuit board 263 may electrically connect a component positioned in the first housing 210 (e.g., the first printed circuit board 261) and a component positioned in the second housing 220 (e.g., the second printed circuit board 262). According to an embodiment, at least a portion of flexible printed circuit board 263 may be disposed across hinge assembly 240. For example, a portion of the flexible printed circuit board 263 may be disposed within the first housing 210 and another portion may be disposed within the second housing 220. According to an embodiment, the flexible printed circuit board 263 may include a first flexible printed circuit board connected to an antenna and a second flexible printed circuit board connected to the display 230.

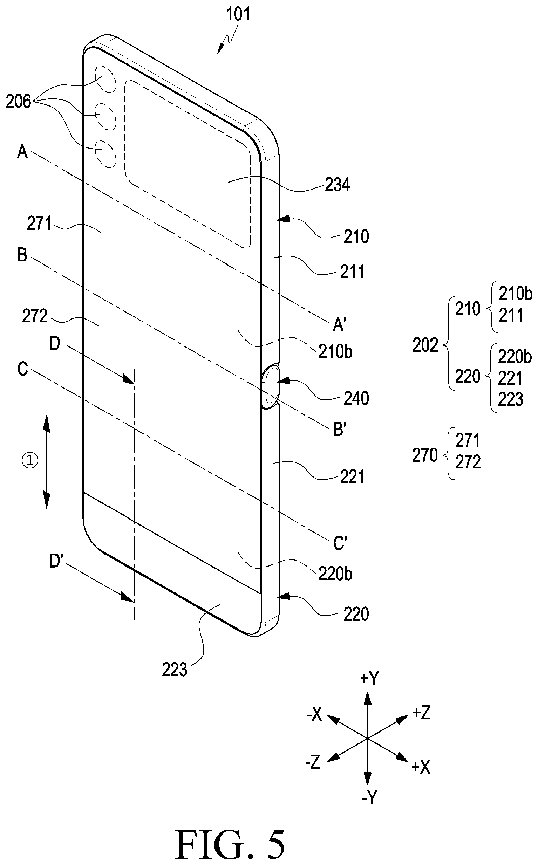

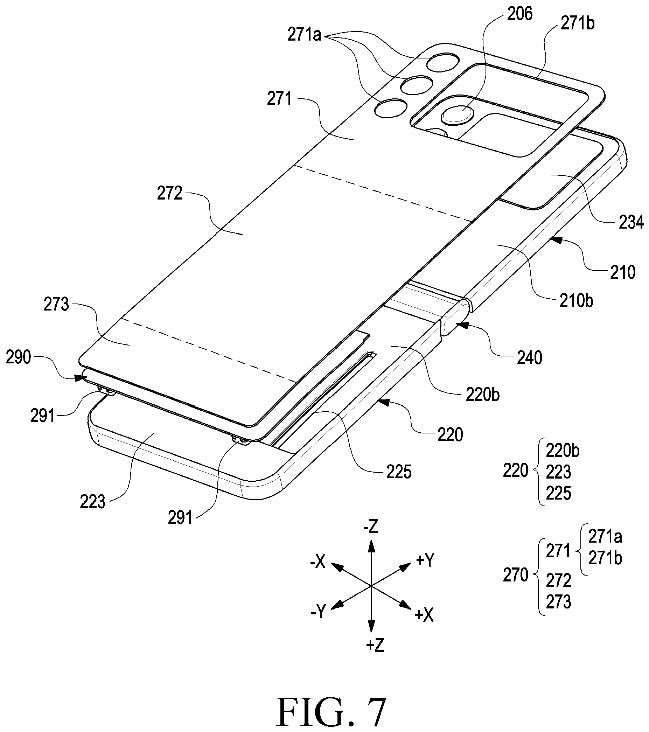

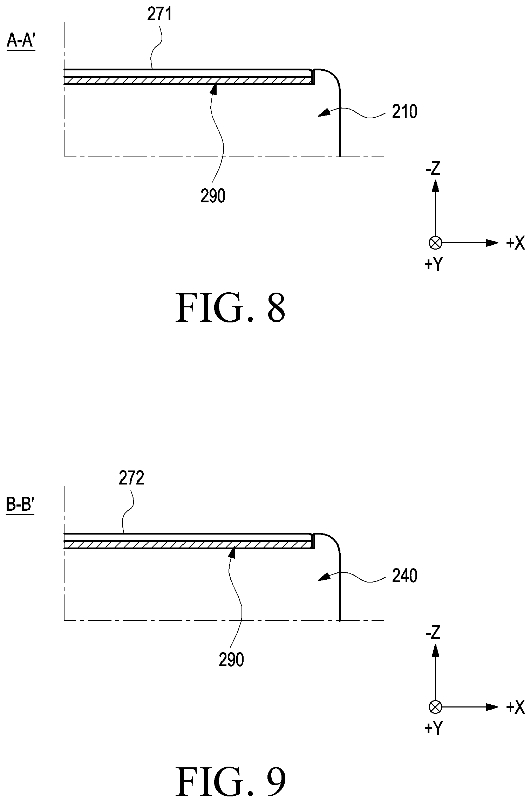

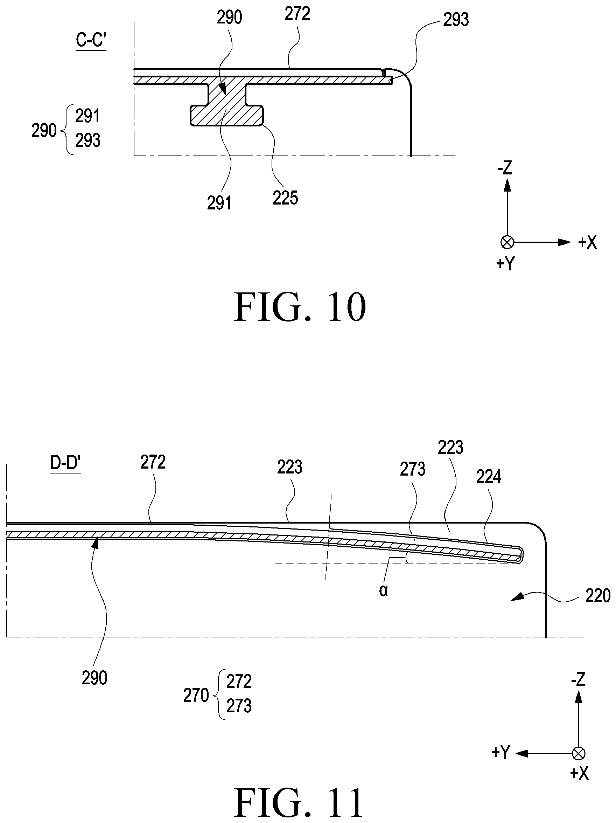

FIG. 5 is a rear perspective view illustrating an electronic device according to an embodiment of the disclosure in the unfolded state. FIG. 6 is a rear perspective view illustrating the electronic device according to an embodiment of the disclosure in an intermediate state. FIG. 7 is an exploded perspective view illustrating the electronic device according to an embodiment of the disclosure. FIG. 8 is a cross-sectional view of the electronic device taken along line A-A' in FIG. 5. FIG. 9 is a cross-sectional view of the electronic device taken along line B-B' in FIG. 5. FIG. 10 is a cross-sectional view of the electronic device taken along line C-C' in FIG. 5. FIG. 11 is a cross-sectional view of the electronic device taken along line D-D' in FIG. 5.

The electronic device 101 in FIGS. 5 to 7 may be referenced as the electronic device 101 in FIG. 1 and/or FIGS. 2 to 4. The first housing 210 in FIGS. 5 to 8 may be referenced as the first housing 210 in FIGS. 2 to 4. The second housing 220 in FIGS. 5 to 7, FIG. 10, and FIG. 11 may be referenced as the second housing 220 in FIGS. 2 to 4. The configuration of the hinge assembly 240 in FIGS. 5 to 7 and FIG. 9 may be wholly or partially identical or similar to that of the hinge assembly 240 in FIG. 4. The configuration of the cover member 270 in FIGS. 5 to 11 may be wholly or partially identical or similar to that of the cover member 270 in FIGS. 2 to 4. In the following description with reference to FIGS. 5 to 7, the above description may be applied identically or similarly to the components given the same reference numerals as those in FIGS. 1 to 4 and may not be repeated.

Referring to FIGS. 5 to 10, in an embodiment, the electronic device 101 may include a first housing 210, a second housing 220, a hinge assembly 240, a cover member 270, and/or a slide structure 290.

In an embodiment, the first housing 210 may include a first surface (not illustrated) (e.g., the first surface 210a in FIG. 2) where the display 230 (e.g., the display 230 in FIGS. 2 and 4) is disposed, and a third surface 210b (e.g., the third surface 210b in FIG. 2), which is opposite to the first surface and where a portion of the cover member 270 is disposed. The first housing 210 may include a first side surface frame 211 (e.g., the first side surface frame 211 in FIGS. 3 and 4) at least partially connecting the respective edges of the first surface and the third surface 210b.

In an embodiment, the second housing 220 may include a second surface (not illustrated) (e.g., the second surface 220a in FIG. 2) where the display 230 (e.g., the display 230 in FIGS. 2 and 4) is disposed, and a fourth surface 220b (e.g., the fourth surface 220b in FIG. 2), which is opposite to the second surface and where a portion of the cover member 270 is disposed. The second housing 220 may include a second side surface frame 221 (e.g., the second side surface frame 221 in FIGS. 3 and 4) partially connecting the respective edges of the second surface and the fourth surface 220b. In an embodiment, at least one rear camera module 206 and/or a rear display 234 may be disposed on the third surface 210b of the second housing 220.

In an embodiment, the second housing 220 may include a support area 223 (e.g., the support area 223 in FIG. 3), a guide portion 224, at least one rail area 225 configured to accommodate a first connection member 291 of the slide structure 290, and/or a pair of side surface grooves 226 configured to accommodate a second connection member 292 of the slide structure 290.

According to an embodiment, the support area 223 may be provided in an area adjacent to an end portion (e.g., the end portion in the -Y direction) of the second housing 220. According to an embodiment, the guide portion 224 of the second housing 220 may refer to a space between the support area 223 and the fourth surface 220b. As described below, the cover member 270 according to an embodiment of the disclosure may have an area configured to be slid into or slid out from the guide portion 224 based on the rotation of the hinge assembly 240 or the folding or unfolding operation of the electronic device 101.

In an embodiment, the cover member 270 may be disposed to cross the first housing 210, the hinge assembly 240, and the second housing 220. For example, the cover member 270 and the display 230 may be disposed parallel to each other but oriented in opposite directions. According to an embodiment, the cover member 270 may be disposed to enclose at least a portion of the third surface 210b of the first housing 210, a portion of the hinge assembly 240, and at least a portion of the fourth surface 220b of the second housing 220. In an embodiment, the cover member 270 may be smaller than the rear surface (e.g., the third surface 210b and the fourth surface 220b) of the electronic device 101. For example, the first housing 210 and/or the second housing 220 may include a recessed area (not illustrated) on their respective rear surfaces (e.g., the third surface 210b and/or the fourth surface 220b). For example, the recessed area (not illustrated) may overlap the cover member 270 and may be configured such that the cover member 270 is seated therein.

In an embodiment, the cover member 270 may include a first cover area 271, a second cover area 272, and a third cover area 273 sequentially arranged in a first axial direction (e.g., the direction of arrow ① in FIGS. 5 and 6) without overlapping one another. According to an embodiment, the first cover area 271 may be disposed on the third surface 210b of the first housing 210. For example, at least a portion of the first cover area 271 may be fixedly coupled to the first housing 210. According to an embodiment, the second cover area 272 may be connected to the first cover area 271 and may be disposed on a portion of the hinge assembly 240 and the fourth surface 220b of the second housing 220. For example, the second cover area 272 may be provided to be displaceable relative to the hinge assembly 240 and the second housing 220. According to an embodiment, the third cover area 273 may be connected to the second cover area 272 and may correspond to an area extending from an end portion in the first direction (e.g., the end portion in the -Y direction) of the second housing 220. The third cover area 273 may be configured to be slid into or slid out from the guide portion 224.

Referring to FIG. 7, according to an embodiment, the cover member 270 may include at least one first opening area 271a and/or at least one second opening area 271b, each formed in an area overlapping at least one rear camera module and/or rear display 234 disposed on the rear surface (e.g., the third surface 210b or the fourth surface 220b) of the electronic device 101. According to an embodiment, multiple first opening areas 271a may be provided on the first cover area 271 to be spaced apart from one another. For example, the second opening area 271b may be disposed adjacent to the multiple first opening areas 271a. Depending on the embodiment of the electronic device 101, the first opening areas 271a and/or the second opening area 271b may be omitted. The shape, positions, and number of first opening areas 271a and/or second opening areas 271b are merely exemplary and may vary.

In an embodiment, at least a portion of the first cover area 271 may be fixed to the first surface. The second cover area 272 may not be fixed to the hinge assembly 240 or the second housing 220. According to an embodiment, the second cover area 272 may be configured to slide in the first axial direction (e.g., the direction of arrow ① in FIGS. 5 and 6) relative to the hinge assembly 240 and the second housing 220.

In an embodiment, the slide structure 290 may be disposed on one side of the cover member 270 (e.g., in the +Z direction). For example, the slide structure 290 may be coupled to one surface (e.g., the surface in the +Z direction) of the cover member 270. For example, on one side of the slide structure 290 (e.g., in the +Z direction), the first housing 210, the second housing 220, and/or the hinge assembly 240 may be disposed.

In an embodiment, the slide structure 290 may include a plate member with a portion coupled to the cover member 270, at least one first connection member 291, and/or a pair of second connection members 292. For example, at least a portion of the slide structure 290 may be made of a flexible material.

Referring to FIG. 7, in an embodiment, the slide structure 290 may be disposed between the second housing 220 and the cover member 270. For example, the slide structure 290 may overlap at least a portion of the fourth surface 220b. For example, the slide structure 290 may include a plate member smaller than the fourth surface 220b of the second housing 220. Referring to FIGS. 5, 8, and 9, in an embodiment, the slide structure 290 may include a plate member extending from a portion disposed on the fourth surface 220b of the second housing 220 to at least a portion of the hinge assembly 240 and/or at least a portion of the third surface 210b of the first housing 210. In this case, the slide structure 290 may include an opening area overlapping the rear camera module and/or the rear display 234. However, the shape of the slide structure 290 described above is merely exemplary and may be provided in an extended or reduced shape depending on the embodiment of the electronic device 101.

Referring to FIG. 11, in an embodiment, the support area 223 may be provided to cover a portion of the fourth surface 220b and may be spaced apart from the fourth surface 220b by a predetermined distance.

Referring to FIG. 11, in an embodiment, the guide portion 224 may provide a space configured to accommodate the third cover area 273, which includes an end portion (e.g., end portion in the -Y direction) of the second cover area 272 of the cover member 270. For example, the surface of the guide portion 224 facing the slide structure 290 may be the surface connected to the fourth surface 220b.

Referring to FIG. 11, in an embodiment, the guide portion 224 may be inclined to form a predetermined angle α with the fourth surface 220b of the second housing 220. According to an embodiment, the surface of the guide portion 224 facing a surface of the cover member 270 and/or the slide structure 290 may include a flat surface and/or a curved surface. For example, the guide portion 224 may have an extended shape such that at least a portion of its section forms a parabola in the first direction or the length direction of the electronic device 101 (e.g., the Y-axis direction). Herein, the guide portion 224 may be referred to as a component of the second housing 220 or the electronic device 101.

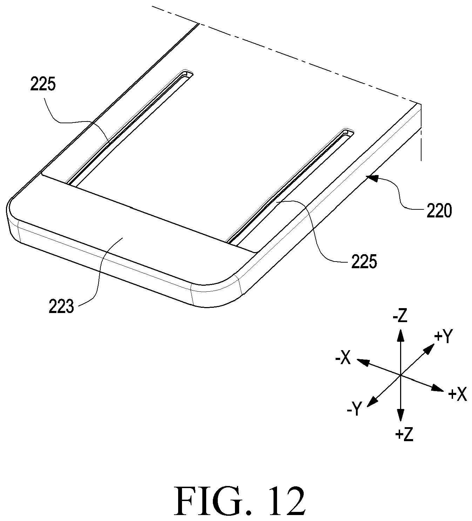

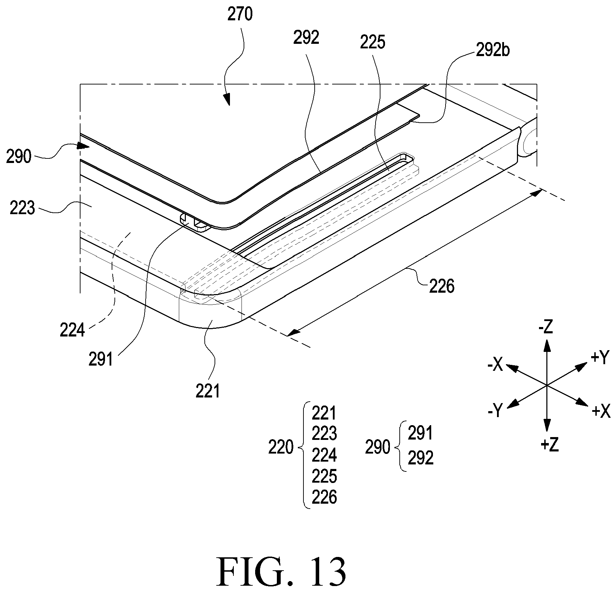

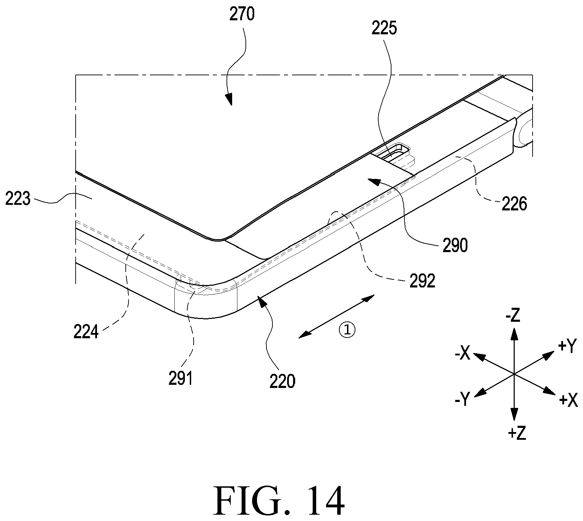

FIG. 12 is a rear perspective view illustrating a second housing according to an embodiment of the disclosure. FIG. 13 is a view illustrating a connection relationship between a slide structure and the second housing according to an embodiment of the disclosure. FIG. 14 is a view illustrating a connection relationship between a slide structure and the second housing according to an embodiment of the disclosure.

The second housing 220 in FIGS. 12 to 14 may be referenced as the second housing 220 in FIGS. 5 to 7, FIG. 10, and FIG. 11. The cover member 270 in FIGS. 13 and 14 may be referenced as the cover member 270 in FIGS. 5 to 7. The slide structure 290 in FIGS. 13 and 14 may be referenced as the slide structure 290 in FIGS. 7 to 10.

According to an embodiment, the slide structure 290 may be connected to the second housing 220 to allow the cover member 270 to slide in the first axial direction (e.g., the direction of arrow ①). In an embodiment, the first connection member 291 may be disposed on one surface (e.g., the surface in the +Z direction) of the slide structure 290 facing the second housing 220. For example, the first connection member 291 may protrude toward the fourth surface 220b and may extend along the length direction of the electronic device 101 (e.g., the Y-axis direction) or the first axis. An end portion of the first connection member 291 may be configured to engage with the rail area 225 of the second housing 220. For example, the end portion of the first connection member 291 may have a T shape. For example, the length of the rail area 225 may be greater than the length of the first connection member 291, and the first connection member 291 may be configured to slide along the rail area 225 in the first direction (e.g., the direction of arrow ① in FIG. 14). For example, multiple (e.g., two) first connection member 291 may be provided.

In an embodiment, multiple second (e.g., two) connection members 292 may be provided on the widthwise sides of the slide structure 290 (the X-axis sides). For example, the second connection members 292 may be configured to engage with side surface grooves 226 provided on the inner sides of both side surfaces of the second housing 220 (e.g., the widthwise side surfaces or the side surfaces in the X-axis direction). Referring to FIG. 13, the second connection member 292 may be provided on an area of a widthwise side surface of the slide structure 290 to protrude outward relative to the remaining area. For example, the second connection member 292 may extend from the lower end portion (e.g., the end portion in the -Y direction) of the slide structure 290 to the point indicated by reference numeral 292b in FIG. 13. According to an embodiment, the length of the side surface groove 226 of the second housing 220 may be longer than the length of the second connection member 292, and the second connection member 292 may be configured to slide along the side surface groove 226 in the first direction (e.g., the direction of arrow ① in FIG. 14). According to an embodiment, the second connection member 292 may assist in maintaining the slide structure 290 in close contact with the second housing 220 while allowing the slide structure 290 to slide relative to the second housing 220.

According to an embodiment, based on the rotation of the hinge assembly 240 or the unfolding or folding operation of the electronic device 101, the slide structure 290 may be displaced in the first axial direction (e.g., the direction of arrow ①) relative to the second housing 220. According to an embodiment, while the first cover area 271 of the cover member 270 remains fixed to the third surface 210b, the second cover area 272, which is not fixed to the hinge assembly 240 and/or the fourth surface 220b, may be displaced relative to the second housing 220. For example, based on the rotation of the hinge assembly 240 or the rotation of the first housing 210 and/or the second housing 220, tensile force acting in the first axial direction (e.g., the direction of arrow ①) may be applied to the second cover area 272. The second cover area 272 may be displaced in the first axial direction (e.g., the direction of arrow ①) due to the tensile force. For example, when the first housing 210 and/or the second housing 220 rotates such that the angle between the first housing 210 and the second housing 220 decreases, the second cover area 272 may move toward the hinge assembly 240 along the first axial direction relative to the second housing 220. For example, when the first housing 210 and/or the second housing 220 rotates such that the angle between the first housing 210 and the second housing 220 increases, the second cover area 272 may move away from the hinge assembly 240 along the first axial direction.

FIG. 15 is a rear perspective view illustrating an electronic device according to an embodiment of the disclosure in the unfolded state. FIG. 16 is a rear perspective view illustrating the electronic device according to an embodiment of the disclosure in an intermediate state.

The electronic device 101 in FIGS. 15 and 16 may be referenced as the electronic device 101 in FIGS. 5 to 7. The first housing 210 and the cover member 270 in FIGS. 15 and 16 may be referenced as the first housing 210 in FIGS. 5 to 8. The second housing 220 in FIGS. 15 and 16 may be referenced as the second housing 220 in FIGS. 5 to 7, FIG. 10, and FIG. 11. The hinge assembly 240 in FIG. 16 may be referenced as the hinge assembly 240 in FIGS. 5 to 7 and FIG. 9. The cover member 270 in FIGS. 15 and 16 may be referenced as the cover member 270 in FIGS. 13 and 14. The slide structure 290 in FIGS. 15 and 16 may be referenced as the slide structure 290 in FIGS. 13 and 14.

The electronic device 101 in FIGS. 15 and 16 may be at least partially different from the electronic device 101 in FIGS. 5 to 7 in terms of the configuration of the hinge cover 243 of the hinge assembly 240, while the remaining components (e.g., the second housing 220, the cover member 270, and the slide structure 290) may be identical to those of the electronic device 101 in FIGS. 5 to 7.

Referring to FIGS. 15 and 16, the hinge assembly 240 may include a hinge cover 243 (e.g., the hinge cover 243 in FIG. 3, FIG. 4, and/or FIG. 6). According to an embodiment, at least a portion of the hinge cover 243 may be disposed inside the first side surface frame 211 of the first housing 210 and/or the second side surface frame 221 of the second housing 220. For example, the outer surfaces of both widthwise side surfaces (e.g., in the X-axis direction) of the hinge cover 243 may at least partially overlap the outer surfaces of the first side surface frame 211 and/or the second side surface frame 221. For example, referring to FIG. 15, in the unfolded state of the electronic device 101, most of the hinge cover 243 may be covered by the first side surface frame 211 and the second side surface frame 221. For example, in the folded state of the electronic device 101 (e.g., the fully folded state in FIG. 16) or an intermediate state where the first housing 210 and the second housing 220 form a predetermined angle (not illustrated), at least a portion of the hinge cover 243 may be exposed to the outside of the electronic device. However, the above-described first side surface frame 211, the second side surface frame 221, and the hinge cover 243 are merely examples, and their shapes and coupling relationships may vary.

In general, a foldable electronic device may include a structure where a pair of housings are connected to each other by a hinge assembly. The hinge assembly may include a hinge cover that accommodates and protects a hinge module therein. The hinge cover may be disposed between the pair of housings. Such a hinge cover is generally provided as a separate component from the housing, and, for example, the connection portion with the housing may be visible from the outside in the folded state of the electronic device. Since the connection portion between the hinge cover and the housing forms a fine gap, problems such as a user's hand getting caught in the gap or the infiltration of foreign substances such as moisture or dust may occur.

The embodiments of the disclosure provide a cover member disposed on the outer surface of a housing opposite the display in a foldable electronic device to cover the connection portion between the pair of housings and the hinge assembly and to prevent the connection portion from being exposed to the exterior of the electronic device, thereby providing an integrated exterior, as well as an electronic device including the cover member.

However, the problems that the disclosure seeks to solve are not limited to the aforementioned problems, and may be expanded in various ways.

The embodiments of the disclosure provide a cover member configured to be coupled with a slide structure that is provided to be slidable relative to a portion of a housing in a foldable electronic device to be slid into or slid out from a space of a guide portion provided in the housing during the folding operation of the electronic device, as well as an electronic device including the cover member.

According to the embodiments of the disclosure, in the foldable electronic device, the connection portion between the hinge assembly and the housing is not exposed to the outside due to the cover member, thereby protecting the connection portion from foreign substances such as moisture and dust.

The effects which may be obtained by the disclosure are not limited to those described above, and other effects, which are not described above, may be clearly understood by a person ordinarily skilled in the technical field, to which the present disclosure belongs, from the description.

According to an embodiment disclosed herein, an electronic device 101 may include a first housing 210, a second housing 220, a hinge assembly 240 rotatably connecting the first housing and the second housing to each other, a first surface 210a of the first housing, a flexible display 230, a cover member 270, a slide structure 290, and/or a guide portion 224. The above display may be disposed to cross a portion of the hinge assembly and the second surface 220a of the second housing. The cover member 270 may be disposed to cross a third surface 210b of the first housing opposite the first surface, a portion of the hinge assembly, and a fourth surface 220b of the second housing opposite the second surface. The slide structure 290 may be disposed at least partially between the cover member and the second housing. The slide structure may connect a portion of the cover member to the second housing to be slidable in a first direction. The guide portion 224 may be provided in an area of the second housing to at least partially accommodate the cover member and the slide structure. The guide portion may extend at a predetermined angle α relative to the fourth surface to face an inner side of the second surface from a point on the fourth surface of the second housing.

In an embodiment, the second housing may include a support area 223 extending from an end portion of the first direction of the second housing. The guide portion may be formed between one surface extending from the fourth surface and the support area spaced apart from the one surface.

In an embodiment, the slide structure may include a plate member coupled to one surface of the slide structure facing the fourth surface of the second housing. The plate member may extend to at least a portion of the hinge assembly or at least a portion of the second housing.

In an embodiment, The cover member may include a first cover area 271 disposed on the first housing, and a second cover area 272 coupled to the first cover area and disposed on the hinge assembly or the second housing. The cover member may include a third cover area 273 coupled to the second cover area, disposed on the second housing, and including an end portion of the cover member. The third cover area may have at least a portion that can be accommodated in the guide portion.

In an embodiment, at least a portion of the first cover area is fixed to the first housing. At least a portion of the second cover area and the third cover area may not be fixed to the hinge assembly or the second housing.

In an embodiment, when at least one of the first housing or the second housing rotates such that an angle between the first housing and the second housing is reduced, the third cover area may be slid out from the guide portion.

In an embodiment, the slide structure may include multiple connection structures, each of which protrudes in at least one direction intersecting the first direction and is slidably connected to a portion of the second housing.

In an embodiment, when at least one of the first housing or the second housing rotates such that an angle between the first housing and the second housing increases, the third cover area may be slid into the guide portion.

In an embodiment, when at least one of the first housing or the second housing rotates, at least a portion of the second cover area and the third cover area may slide in the first direction relative to the hinge assembly or the second housing.

In an embodiment, the multiple connection structures may include at least one first connection member 291 protruding toward the fourth surface and extending in the first direction. The second housing may include at least one rail area 225 formed concavely onthe fourth surface and configured to engage with the first connection member. The first connection member may be slidably connected to the rail area.

In an embodiment, the first connection member may include a T-shaped end portion.

In an embodiment, a length in the first direction of the rail area may be longer than a length in the first direction of the first connection member.

In an embodiment, the second housing may include a side surface frame 221 partially connecting respective edges of the second surface and the fourth surface. The side surface frame may include a pair of side walls extending parallel in the first direction and at least one side surface groove 226 formed on an inner surface of at least one of the pair of side walls and extending in the first direction.

In an embodiment, the multiple connection structures may include at least one second connection member 292 protruding toward the side surface groove and extending in the first direction. The second connection member may be slidably connected to the side surface groove.

In an embodiment, a length in the first direction of the side surface groove may be longer than a length in the first direction of the second connection member.

According to an embodiment disclosed herein, an electronic device 101 may include a first housing 210, a second housing 220, a hinge assembly 240 rotatably connecting the first housing and the second housing to each other, a first surface 210a of the first housing, a flexible display 230, a cover member 270, a slide structure 290, and/or a guide portion 224. The display may be disposed to cross a portion of the hinge assembly and the second surface 220a of the second housing. The cover member 270 may be disposed to cross a third surface 210b of the first housing opposite the first surface, a portion of the hinge assembly, and a fourth surface 220b of the second housing opposite the second surface. The slide structure may be disposed at least partially between the cover member and the second housing. The slide structure may connect a portion of the cover member to the second housing to be slidable in a first direction. The guide portion 224 may be provided in an area of the second housing to at least partially accommodate the cover member and the slide structure. The second housing may include a pair of side walls extending parallel in the first direction and at least one side surface groove 226 formed on an inner surface of at least one of the pair of side walls and extending in the first direction.

In an embodiment, the second housing may include at least one second connection member 292 protruding toward the side surface groove and extending in the first direction. The second connection member may be slidably connected to the side surface groove.

In an embodiment, the guide portion may extend at a predetermined angle α relative to the fourth surface to face an inner side of the second surface from a point on the fourth surface of the second housing.

In an embodiment, the cover member may include a first cover area 271 disposed on the first housing, and a second cover area 272 connected to the first cover area and disposed on the hinge assembly or the second housing. The cover member may include a third cover area 273 connected to the second cover area, disposed on the second housing, and including an end portion of the cover member. The third cover area may be configured to be at least partially accommodated in the guide portion.

In an embodiment, at least a portion of the first cover area is fixed to the first housing. When at least one of the first housing or the second housing rotates, at least a portion of the second cover area and the third cover area may be slid in the first direction relative to the hinge assembly or the second housing to be slid into or slid out from the guide portion.

An embodiment disclosed herein should be understood as an example rather than limiting the disclosure. It will be apparent to those skilled in the art that various changes can be made in form and detail without departing from the overall scope of the disclosure, including the appended claims.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a first housing (210);
a second housing (220);
a hinge assembly (240) rotatably connecting the first housing (210) and the second housing (220) to each other;
a flexible display (230) disposed to cross a first surface (210a) of the first housing (210), a portion of the hinge assembly (240), and a second surface (220a) of the second housing (220);
a cover member (270) disposed to cross a third surface (210b) of the first housing (210) facing opposite the first surface (210a), a portion of the hinge assembly (240), and a fourth surface (220b) of the second housing (220) opposite the second surface (220a);
a slide structure (290) disposed at least partially between the cover member (270) and the second housing (220), and connecting a portion of the cover member (270) to the second housing (220) to be slidable in a first direction (Y);
**characterised in that** the electronic device further comprises:
a guide portion (224) provided in an area of the second housing (220) to at least partially accommodate the cover member (270) and the slide structure (290),
wherein the guide portion (224) extends at a predetermined angle (α) relative to the fourth surface (220b) to face an inner side of the second surface (220a) from a point on the fourth surface (220b) of the second housing (220).

2. The electronic device of claim 1, wherein the second housing comprises a support area (223) extending from an end portion of the first direction of the second housing, and
wherein the guide portion is formed between one surface extending from the fourth surface and the support area spaced apart from the one surface.

3. The electronic device of claim 1 or 2, wherein the slide structure comprises a plate member coupled to one surface of the slide structure facing the fourth surface of the second housing, and
wherein the plate member extends to at least a portion of the hinge assembly or at least a portion of the second housing.

4. The electronic device of any one of claims 1 to 3, wherein the cover member comprises:
a first cover area (271) disposed on the first housing;
a second cover area (272) coupled to the first cover area and disposed on the hinge assembly or the second housing; and
a third cover area (273) coupled to the second cover area, disposed on the second housing, and comprising an end portion of the cover member, the third cover area having at least a portion that can be accommodated in the guide portion.

5. The electronic device of claim 4, wherein at least a portion of the first cover area is fixed to the first housing, and
wherein at least a portion of the second cover area and the third cover area are not fixed to the hinge assembly or the second housing.

6. The electronic device of claim 4 or 5, wherein, when at least one of the first housing or the second housing rotates, at least a portion of the second cover area and the third cover area are configured to slide in the first direction relative to the hinge assembly or the second housing.

7. The electronic device of claim 6, wherein, when at least one of the first housing or the second housing rotates such that an angle between the first housing and the second housing is reduced, the third cover area is configured to slide out from the guide portion.

8. The electronic device of claim 6 or 7, wherein, when at least one of the first housing or the second housing rotates such that an angle between the first housing and the second housing increases, the third cover area is configured to slide into the guide portion.

9. The electronic device of any one of claims 1 to 8, wherein the slide structure comprises multiple connection structures, each of which protrudes in at least one direction intersecting the first direction and is slidably connected to a portion of the second housing.

10. The electronic device of claim 9, wherein the multiple connection structures comprise at least one first connection member (291) protruding toward the fourth surface and extending in the first direction,
wherein the second housing comprises at least one rail area (225) formed concavely on the fourth surface and configured to engage with the first connection member, and
wherein the first connection member is slidably connected to the rail area.

11. The electronic device of claim 10, wherein the first connection member comprises a T-shaped end portion.

12. The electronic device of claim 10 or 11, wherein a length in the first direction of the rail area is longer than a length in the first direction of the first connection member.

13. The electronic device of any one of claims 10 to 12, wherein the second housing comprises a side surface frame (221) partially connecting respective edges of the second surface and the fourth surface, and
wherein the side surface frame comprises a pair of side walls extending parallel in the first direction and at least one side surface groove (226) formed on an inner surface of at least one of the pair of side walls and extending in the first direction.

14. The electronic device of claim 13, wherein the multiple connection structures comprise at least one second connection member (292) protruding toward the side surface groove and extending in the first direction, and
wherein the second connection member is slidably connected to the side surface groove.

15. The electronic device of claim 14, wherein a length in the first direction of the side surface groove is longer than a length in the first direction of the second connection member.

## Patentansprüche

1. Elektronische Vorrichtung (101), umfassend:
ein erstes Gehäuse (210);
ein zweites Gehäuse (220);
eine Scharnieranordnung (240), die das erste Gehäuse (210) und das zweite Gehäuse (220) drehbar miteinander verbindet;
eine flexible Anzeige (230), die so angeordnet ist, dass sie eine erste Oberfläche (210a) des ersten Gehäuses (210), einen Abschnitt der Scharnieranordnung (240) und eine zweite Oberfläche (220a) des zweiten Gehäuses (220) überquert;
ein Abdeckelement (270), das so angeordnet ist, dass es eine dritte Oberfläche (210b) des ersten Gehäuses (210), die der ersten Oberfläche (210a) gegenüberliegt, einen Abschnitt der Scharnieranordnung (240) und eine vierte Oberfläche (220b) des zweiten Gehäuses (220), die der zweiten Oberfläche (220a) gegenüberliegt, überquert;
eine Gleitstruktur (290), die zumindest teilweise zwischen dem Abdeckelement (270) und dem zweiten Gehäuse (220) angeordnet ist und einen Abschnitt des Abdeckelements (270) mit dem zweiten Gehäuse (220) verbindet, um in einer ersten Richtung (Y) verschiebbar zu sein;
**dadurch gekennzeichnet, dass** die elektronische Vorrichtung ferner Folgendes umfasst:
einen Führungsabschnitt (224), der in einem Bereich des zweiten Gehäuses (220) vorgesehen ist, um das Abdeckelement (270) und die Gleitstruktur (290) zumindest teilweise aufzunehmen,
wobei sich der Führungsabschnitt (224) in einem vorbestimmten Winkel (a) relativ zur vierten Oberfläche (220b) erstreckt, um von einem Punkt auf der vierten Oberfläche (220b) des zweiten Gehäuses (220) einer Innenseite der zweiten Oberfläche (220a) zugewandt zu sein.

2. Elektronische Vorrichtung nach Anspruch 1, wobei das zweite Gehäuse einen Stützbereich (223) umfasst, der sich von einem Endabschnitt der ersten Richtung des zweiten Gehäuses erstreckt, und
wobei der Führungsabschnitt zwischen einer sich von der vierten Oberfläche erstreckenden Oberfläche und dem von der einen Oberfläche beabstandeten Stützbereich ausgebildet ist.

3. Elektronische Vorrichtung nach Anspruch 1 oder 2, wobei die Gleitstruktur ein Plattenelement umfasst, das mit einer der vierten Oberfläche des zweiten Gehäuses zugewandten Oberfläche der Gleitstruktur gekoppelt ist, und
wobei sich das Plattenelement bis zu mindestens einem Abschnitt der Scharnieranordnung oder mindestens einem Abschnitt des zweiten Gehäuses erstreckt.

4. Elektronische Vorrichtung nach einem der Ansprüche 1 bis 3, wobei das Abdeckelement Folgendes umfasst:
einen ersten Abdeckbereich (271), der auf dem ersten Gehäuse angeordnet ist;
einen zweiten Abdeckbereich (272), der mit dem ersten Abdeckbereich gekoppelt und auf der Scharnieranordnung oder dem zweiten Gehäuse angeordnet ist; und
einen dritten Abdeckbereich (273), der mit dem zweiten Abdeckbereich gekoppelt ist, auf dem zweiten Gehäuse angeordnet ist und einen Endabschnitt des Abdeckelements umfasst, wobei der dritte Abdeckbereich zumindest einen Abschnitt aufweist, der in dem Führungsabschnitt aufgenommen sein kann.

5. Elektronische Vorrichtung nach Anspruch 4, wobei mindestens ein Abschnitt des ersten Abdeckbereichs am ersten Gehäuse befestigt ist, und
wobei mindestens ein Abschnitt des zweiten Abdeckbereichs und des dritten Abdeckbereichs nicht an der Scharnieranordnung oder dem zweiten Gehäuse befestigt ist.

6. Elektronische Vorrichtung nach Anspruch 4 oder 5, wobei, wenn sich zumindest eines von dem ersten Gehäuse und dem zweiten Gehäuse dreht, zumindest ein Abschnitt des zweiten Abdeckbereichs und des dritten Abdeckbereichs so konfiguriert ist, dass er in der ersten Richtung relativ zu der Scharnieranordnung oder dem zweiten Gehäuse gleitet.

7. Elektronische Vorrichtung nach Anspruch 6, wobei, wenn sich zumindest eines von dem ersten Gehäuse und dem zweiten Gehäuse so dreht, dass sich der Winkel zwischen dem ersten Gehäuse und dem zweiten Gehäuse verringert, der dritte Abdeckbereich so konfiguriert ist, dass er aus dem Führungsabschnitt herausgleitet.

8. Elektronische Vorrichtung nach Anspruch 6 oder 7, wobei, wenn sich zumindest eines von dem ersten Gehäuse und dem zweiten Gehäuse so dreht, dass sich der Winkel zwischen dem ersten Gehäuse und dem zweiten Gehäuse vergrößert, der dritte Abdeckbereich so konfiguriert ist, dass er in den Führungsabschnitt gleitet.

9. Elektronische Vorrichtung nach einem der Ansprüche 1 bis 8, wobei die Gleitstruktur mehrere Verbindungsstrukturen umfasst, von denen jede in mindestens eine Richtung vorsteht, die die erste Richtung schneidet, und verschiebbar mit einem Abschnitt des zweiten Gehäuses verbunden ist.

10. Elektronische Vorrichtung nach Anspruch 9, wobei die mehreren Verbindungsstrukturen mindestens ein erstes Verbindungselement (291) umfassen, das in Richtung der vierten Oberfläche vorsteht und sich in der ersten Richtung erstreckt,
wobei das zweite Gehäuse mindestens einen Schienenbereich (225) umfasst, der auf der vierten Oberfläche konkav ausgebildet und so konfiguriert ist, dass er mit dem ersten Verbindungselement in Eingriff kommt, und
wobei das erste Verbindungselement verschiebbar mit dem Schienenbereich verbunden ist.

11. Elektronische Vorrichtung nach Anspruch 10, wobei das erste Verbindungselement einen T-förmigen Endabschnitt umfasst.

12. Elektronische Vorrichtung nach Anspruch 10 oder 11, wobei eine Länge des Schienenbereichs in der ersten Richtung größer ist als eine Länge des ersten Verbindungselements in der ersten Richtung.

13. Elektronische Vorrichtung nach einem der Ansprüche 10 bis 12, wobei das zweite Gehäuse einen Seitenflächenrahmen (221) umfasst, der jeweilige Kanten der zweiten Oberfläche und der vierten Oberfläche teilweise verbindet, und
wobei der Seitenflächenrahmen ein Paar Seitenwände, die sich parallel in der ersten Richtung erstrecken, und mindestens eine Seitenflächennut (226) umfasst, die auf einer Innenfläche mindestens einer des Paars Seitenwände ausgebildet ist und sich in der ersten Richtung erstreckt.

14. Elektronische Vorrichtung nach Anspruch 13, wobei die mehreren Verbindungsstrukturen mindestens ein zweites Verbindungselement (292) umfassen, das in Richtung der Seitenflächennut vorsteht und sich in der ersten Richtung erstreckt, und
wobei das zweite Verbindungselement verschiebbar mit der Seitenflächennut verbunden ist.

15. Elektronische Vorrichtung nach Anspruch 14, wobei eine Länge der Seitenflächennut in der ersten Richtung größer ist als eine Länge des zweiten Verbindungselements in der ersten Richtung.

## Revendications

1. Dispositif électronique (101) comprenant :
un premier boîtier (210) ;
un deuxième boîtier (220) ;
un ensemble de charnière (240) reliant de manière rotative le premier boîtier (210) et le deuxième boîtier (220) l'un à l'autre ;
un écran flexible (230) disposé pour traverser une première surface (210a) du premier boîtier (210), une partie de l'ensemble de charnière (240) et une deuxième surface (220a) du deuxième boîtier (220) ;
un élément de couvercle (270) disposé pour traverser une troisième surface (210b) du premier boîtier (210) orientée vers l'opposé de la première surface (210a), une partie de l'ensemble de charnière (240) et une quatrième surface (220b) du deuxième boîtier (220) opposée à la deuxième surface (220a) ;
une structure coulissante (290) disposée au moins partiellement entre l'élément de couvercle (270) et le deuxième boîtier (220), et reliant une partie de l'élément de couvercle (270) au deuxième boîtier (220) de manière à pouvoir coulisser dans une première direction (Y) ;
**caractérisé en ce que** le dispositif électronique comprend en outre :
une partie de guidage (224) prévue dans une zone du deuxième boîtier (220) pour au moins partiellement recevoir l'élément de couvercle (270) et la structure coulissante (290),
dans lequel la partie de guidage (224) s'étend selon un angle prédéterminé (a) par rapport à la quatrième surface (220b) pour être orientée vers un côté intérieur de la deuxième surface (220a) à partir d'un point sur la quatrième surface (220b) du deuxième boîtier (220).

2. Dispositif électronique selon la revendication 1, dans lequel le deuxième boîtier comprend une zone de support (223) s'étendant à partir d'une partie d'extrémité de la première direction du deuxième boîtier, et
dans lequel la partie de guidage est formée entre une surface s'étendant à partir de la quatrième surface et la zone de support espacée de cette surface.

3. Dispositif électronique selon la revendication 1 ou 2, dans lequel la structure coulissante comprend un élément de plaque couplé à une surface de la structure coulissante orientée vers la quatrième surface du deuxième boîtier, et
dans lequel l'élément de plaque s'étend jusqu'à au moins une partie de l'ensemble de charnière ou au moins une partie du deuxième boîtier.

4. Dispositif électronique selon l'une quelconque des revendications 1 à 3, dans lequel l'élément de couvercle comprend :
une première zone de couvercle (271) disposée sur le premier boîtier ;
une deuxième zone de couvercle (272) couplée à la première zone de couvercle et disposée sur l'ensemble de charnière ou le deuxième boîtier ; et
une troisième zone de couvercle (273) couplée à la deuxième zone de couvercle, disposée sur le deuxième boîtier, et comprenant une partie d'extrémité de l'élément de couvercle, la troisième zone de couvercle ayant au moins une partie pouvant être reçue dans la partie de guidage.

5. Dispositif électronique selon la revendication 4, dans lequel au moins une partie de la première zone de couvercle est fixée au premier boîtier, et
dans lequel au moins une partie de la deuxième zone de couvercle et de la troisième zone de couvercle n'est pas fixée à l'ensemble de charnière ou au deuxième boîtier.

6. Dispositif électronique selon la revendication 4 ou 5, dans lequel, lorsque au moins l'un du premier boîtier ou du deuxième boîtier tourne, au moins une partie de la deuxième zone de couvercle et de la troisième zone de couvercle est configurée pour coulisser dans la première direction par rapport à l'ensemble de charnière ou au deuxième boîtier.

7. Dispositif électronique selon la revendication 6, dans lequel, lorsque au moins l'un du premier boîtier ou du deuxième boîtier tourne de sorte qu'un angle entre le premier boîtier et le deuxième boîtier est réduit, la troisième zone de couvercle est configurée pour coulisser hors de la partie de guidage.

8. Dispositif électronique selon la revendication 6 ou 7, dans lequel, lorsque au moins l'un du premier boîtier ou du deuxième boîtier tourne de sorte qu'un angle entre le premier boîtier et le deuxième boîtier augmente, la troisième zone de couvercle est configurée pour coulisser dans la partie de guidage.

9. Dispositif électronique selon l'une quelconque des revendications 1 à 8, dans lequel la structure coulissante comprend de multiples structures de connexion, dont chacune fait saillie dans au moins une direction croisant la première direction et est connectée de manière coulissante à une partie du deuxième boîtier.

10. Dispositif électronique selon la revendication 9, dans lequel les multiples structures de connexion comprennent au moins un premier élément de connexion (291) faisant saillie vers la quatrième surface et s'étendant dans la première direction,
dans lequel le deuxième boîtier comprend au moins une zone de rail (225) formée de manière concave sur la quatrième surface et configurée pour s'engager avec le premier élément de connexion, et
dans lequel le premier élément de connexion est connecté de manière coulissante à la zone de rail.

11. Dispositif électronique selon la revendication 10, dans lequel le premier élément de connexion comprend une partie d'extrémité en forme de T.

12. Dispositif électronique selon la revendication 10 ou 11, dans lequel une longueur dans la première direction de la zone de rail est supérieure à une longueur dans la première direction du premier élément de connexion.

13. Dispositif électronique selon l'une quelconque des revendications 10 à 12, dans lequel le deuxième boîtier comprend un cadre de surface latérale (221) reliant partiellement des bords respectifs de la deuxième surface et de la quatrième surface, et
dans lequel le cadre de surface latérale comprend une paire de parois latérales s'étendant parallèlement dans la première direction et au moins une rainure de surface latérale (226) formée sur une surface intérieure d'au moins l'une de la paire de parois latérales et s'étendant dans la première direction.

14. Dispositif électronique selon la revendication 13, dans lequel les multiples structures de connexion comprennent au moins un deuxième élément de connexion (292) faisant saillie vers la rainure de surface latérale et s'étendant dans la première direction, et
dans lequel le deuxième élément de connexion est connecté de manière coulissante à la rainure de surface latérale.

15. Dispositif électronique selon la revendication 14, dans lequel une longueur dans la première direction de la rainure de surface latérale est supérieure à une longueur dans la première direction du deuxième élément de connexion.
